# FASCICULE DE BREVET EUROPEEN

(11) **EP 3 688 866 B1**
(45) Date de publication et mention de la délivrance du brevet: **11.08.2021**
(21) Numéro de dépôt: 18792429.5
(22) Date de dépôt: 26.09.2018
(51) Int. Cl.: H01F 7/14, H01F 7/122, H02K 35/02, H01H 50/00

(54) **CONVERTISSEUR D'ÉNERGIE ÉLECTROMAGNÉTIQUE**
ELEKTROMAGNETISCHER ENERGIEWANDLER
ELECTROMAGNETIC ENERGY CONVERTER

(30) Priorité: 28.09.2017 FR 1759028
(43) Date de publication de la demande: 05.08.2020
(73) Titulaire: Commissariat à l'énergie atomique et aux énergies alternatives, 75015 Paris (FR)
(72) Inventeur: DESPESSE, Ghislain, 38340 Voreppe (FR); BOISSEAU, Sébastien, 38130 Echirolles (FR); BOUCAUD, Matthieu, 38100 Grenoble (FR)
(74) Mandataire: Brevalex
(86) Numéro de dépôt international: PCT/FR2018/052374
(87) Numéro de publication internationale: WO 2019/063941

(56) Documents cités:
- EP-A1- 2 264 875
- EP-A2- 2 079 154
- CN-U- 206 180 812

## Description

### DOMAINE TECHNIQUE

La présente invention concerne un convertisseur d'énergie électromagnétique. En particulier, la présente invention concerne un convertisseur électromagnétique destiné à être mis en œuvre dans un interrupteur autonome.

### ART ANTÉRIEUR

Un convertisseur d'énergie électromagnétique, connu de l'état de la technique, comprend :
- une culasse ferromagnétique ;
- une bobine conductrice formée par l'enroulement d'un fil conducteur autour d'une section de la culasse ferromagnétique,
- un aimant principal, déporté de la bobine, formant avec la culasse un circuit magnétique fermé.

Selon cette configuration, un flux magnétique généré par l'aimant principal et guidé par la culasse ferromagnétique traverse la bobine conductrice.

Le principe général de fonctionnement du convertisseur d'énergie électromagnétique est basé sur l'activation d'une variation temporelle du flux magnétique traversant la bobine conductrice de manière à faire apparaître une tension électrique aux bornes de cette dernière.

À cet égard, le convertisseur d'énergie électromagnétique est également doté d'un système d'activation mécanique dont l'action permet d'activer la variation temporelle de flux magnétique. En particulier, la variation temporelle de flux magnétique peut être due à un déplacement de l'aimant principal ou du circuit magnétique supportant la bobine conductrice, tel que décrit dans les documents [1] et [2] cités à la fin de la description.

Cependant, ces convertisseurs d'énergie électromagnétique décrits dans les documents [1] et [2] ne sont pas totalement satisfaisants.

L'élément mobile (à savoir l'aimant principal ou le circuit magnétique supportant la bobine conductrice) est généralement massique, ce qui induit un moment d'inertie important, limitant la vitesse de basculement et par conséquent la puissance et l'énergie convertie.

L'épaisseur du dispositif est généralement importante, et rend difficile l'intégration du système dans un interrupteur.

Par ailleurs, un module d'échappement et/ou d'accumulation d'énergie, tels que des lames à ressort, ou encore des cliquets, permettant un mouvement rapide de la bobine conductrice ou de l'aimant principal est généralement mis en œuvre de manière à ce qu'une tension appréciable puisse être atteinte aux bornes de la bobine conductrice.

À titre d'exemple, un déplacement d'une durée de l'ordre de la milliseconde est nécessaire pour un convertisseur, présentant un volume de l'ordre de 1 cm³, pour générer une tension électrique de l'ordre du Volt aux bornes de la bobine conductrice. Une tension de cet ordre de grandeur est notamment requise dès lors que le convertisseur d'énergie électromagnétique est mis en œuvre dans des interrupteurs autonomes.

Cependant, le module d'échappement et/ou d'accumulation d'énergie est généralement en contact avec le circuit magnétique générant ainsi des problèmes de fiabilité et d'usure.

Un convertisseur d'énergie électromagnétique est également divulgué dans CN 206180812 U, EP 2 079 154 A2 et EP 2 264 875 A1.

Un but de la présente invention est donc de proposer un convertisseur d'énergie électromagnétique compact, et susceptible de présenter une tension électrique appréciable aux bornes de la bobine conductrice.

Un autre but de la présente invention est également de proposer un convertisseur d'énergie électromagnétique plus simple à mettre œuvre.

### EXPOSÉ DE L'INVENTION

Les buts énoncés ci-dessus sont au moins en partie atteints par un convertisseur d'énergie électromagnétique selon la revendication 1, comprenant :
- deux plaques ferromagnétiques présentant chacune une face interne ;
- au moins un dispositif de variation de flux magnétique monobloc disposé entre les faces internes, et qui comprend, selon un axe d'élongation AA' et dans l'ordre, une première pièce ferromagnétique prismatique, un aimant et une seconde pièce ferromagnétique prismatique, ledit dispositif est agencé pour pivoter autour d'un axe pivot XX' entre deux positions d'équilibre, et pour lesquelles les première et seconde pièces ferromagnétiques prismatiques entrent chacune en contact avec une face interne différente dès lors que le dispositif de variation de flux magnétique se trouve dans l'une ou l'autre des deux positions d'équilibre ;
- une bobine conductrice agencée pour être traversée par un flux magnétique généré par l'aimant et guidé par les deux plaques ferromagnétiques dans un premier sens S1 dès lors que le dispositif de variation de flux magnétique se trouve dans une des deux positions d'équilibre, et dans un second sens S2, opposé au premier sens S1, dès lors que ledit dispositif se trouve dans l'autre des deux positions d'équilibre.

Selon un mode de mise en œuvre, l'aimant présente des pôles en alignement avec l'axe d'élongation AA'.

Selon un mode de mise en œuvre, les zones de contact sur l'une et/ou l'autre des deux faces internes sont distantes d'une distance D, la distance D étant ajustée de sorte que, dès lors qu'une face interne est en contact avec l'une ou l'autre des première et seconde pièces ferromagnétiques prismatiques selon une zone de contact, le flux magnétique généré par l'aimant est inférieur à 20 % du flux magnétique traversant la bobine conductrice, avantageusement nul, au niveau de l'autre zone de contact, avantageusement la distance D est égale à au moins 25 % de la taille de face interne considérée selon une direction perpendiculaire à l'axe pivot XX'.

Selon un mode de mise en œuvre, les première et seconde pièces ferromagnétiques prismatiques comprennent chacune deux faces de contact destinées à entrer en contact, respectivement, avec l'une ou l'autre des deux faces internes dès lors que le dispositif de variation de flux magnétique se trouve dans l'une ou l'autre des deux positions d'équilibre.

Selon un mode de mise en œuvre, les faces de contact de chacune des première et seconde pièces ferromagnétiques prismatiques sont planes, et agencées de sorte que le contact entre une face de contact et une face interne soit plan.

Selon un mode de mise en œuvre, les faces de contact de chacune des première et seconde pièces ferromagnétiques prismatiques présentent une courbure, ladite courbure étant adaptée pour que le contact entre une face de contact et une face interne soit linéaire et avantageusement incliné par rapport à l'axe pivot XX'.

Selon un mode de mise en œuvre, les deux plaques ferromagnétiques sont maintenues l'une à l'autre par un lien ferromagnétique autour duquel est formé l'enroulement de la bobine.

Selon un mode de mise en œuvre, le lien ferromagnétique est disposé de sorte que la bobine conductrice soit contenue dans un volume délimité par les deux faces internes.

Selon un mode de mise en œuvre, le lien ferromagnétique comprend deux extrémités au niveau desquelles sont fixées chacune des plaques ferromagnétiques.

Selon un mode de mise en œuvre, le lien ferromagnétique a une forme cylindrique, ou une forme cylindrique creuse ou une forme de goupille élastique ou de goupille élastique spiralée.

Selon un mode de mise en œuvre, la bobine conductrice est déportée du volume défini par les deux faces internes.

Selon un mode de mise en œuvre, ledit convertisseur comprend en outre un support auquel est lié, par une liaison pivot autour de l'axe pivot XX', le dispositif de variation de flux magnétique.

Selon un mode de mise en œuvre, la liaison pivot est assurée par un organe pivot.

Selon un mode de mise en œuvre, l'organe pivot comprend une section de maintien, ladite section de maintien maintenant l'aimant par une liaison fixe.

Selon un mode de mise en œuvre, l'organe pivot comprend une fourche formée par deux branches latérales destinées à maintenir le dispositif de variation de flux magnétique au niveau, respectivement, de la première pièce ferromagnétique prismatique, et de la seconde pièce ferromagnétique prismatique.

Selon un mode de mise en œuvre, l'une et/ou l'autre des plaques ferromagnétiques présente un évidement au droit de l'aimant.

L'invention concerne également un interrupteur comprenant un convertisseur selon la présente invention.

### BRÈVE DESCRIPTION DES DESSINS

D'autres caractéristiques préférées et avantages apparaîtront dans la description qui va suivre du convertisseur d'énergie électromagnétique selon l'invention, donnés à titre d'exemples non limitatifs, en référence aux dessins annexés dans lesquels :
- la figure la est une représentation schématique en perspective d'un convertisseur d'énergie électromagnétique selon une première variante d'un premier mode de réalisation de l'invention,
- la figure 1b reprend les caractéristiques de la figure 1a, et indique en mm les dimensions des éléments composant le convertisseur selon un exemple de mise en œuvre ;
- la figure 1c est une représentation schématique en perspective d'un convertisseur d'énergie électromagnétique comprenant deux dispositifs de variation de flux magnétique selon la première variante d'un premier mode de réalisation de l'invention,
- la figure 2 est une représentation schématique en perspective d'un convertisseur d'énergie électromagnétique maintenu dans un support selon la présente invention,
- la figure 3 est une représentation schématique en vue de dessus d'un convertisseur d'énergie électromagnétique selon une seconde variante du premier mode de réalisation de la présente invention, le dispositif de variation de flux magnétique n'étant pas représenté,
- les figures 4a et 4b sont des représentations schématiques en perspective de liens ferromagnétiques susceptibles d'être mis en œuvre selon la première variante du premier mode de réalisation de la présente invention, en particulier, la figure 4a représente une goupille élastique et la figure 4b représente une goupille élastique spiralé,
- les figures 5a et 5b sont des représentations schématiques, selon un plan de coupe perpendiculaire à l'axe XX', du convertisseur selon la présente invention, en particulier, les figures 5a et 5b représentent, respectivement, un contact courbe et un contact plan entre une face de contact et une face interne,
- la figure 6 est une représentation schématique en perspective d'un organe pivot susceptible d'être mis en œuvre dans le convertisseur d'énergie électromagnétique selon la présente invention,
- la figure 7a est une représentation, selon un plan de coupe perpendiculaire à l'axe XX', du convertisseur selon la présente invention, en particulier, la figure 7a représente les alésages des première et seconde pièces ferromagnétiques prismatiques destinés à coopérer avec les deux branches latérales de l'organe pivot,
- la figure 7b est une représentation, selon un plan de coupe perpendiculaire à l'axe XX', du convertisseur selon la présente invention, en particulier, la figure 7b représente la première concavité et la seconde concavité des première et seconde pièces ferromagnétiques prismatiques destinées à coopérer avec les deux branches latérales de l'organe pivot,
- la figure 8a est une représentation schématique en perspective du convertisseur selon la présente invention, en particulier, les première et seconde plaques sont pourvues chacune d'évidement de forme circulaire,
- la figure 8b est une représentation schématique en perspective du convertisseur selon la présente invention, en particulier, les première et seconde plaques sont pourvues chacune d'un évidement en forme d'encoche,
- la figure 9 est une représentation schématique en perspective d'un convertisseur d'énergie électromagnétique selon un second mode de réalisation de l'invention,
- la figure 10 est une représentation schématique en perspective d'un convertisseur d'énergie électromagnétique selon un troisième mode de réalisation de l'invention,
- Les figures 11a à 11c sont des représentations schématiques selon un quatrième mode de réalisation de la présente invention, en particulier, la figure 11a représente la tôle ferromagnétique avant pliage, les figures 11b et 11c sont des représentations selon des vues latérales de la tôle pliée selon les lignes A et B,
- Les figures 12a et 12b sont des représentations de l'intensité du champ magnétique (en niveaux de gris) au niveau des zones de contact, lorsque le convertisseur d'énergie électromagnétique est, respectivement, dans la première position d'équilibre P1 (figure 12a) et dans la seconde position d'équilibre P2 (figure 12b).

### EXPOSÉ DÉTAILLÉ DE MODES DE RÉALISATION PARTICULIERS

L'invention décrite de manière détaillée ci-dessous met en œuvre un convertisseur d'énergie électromagnétique pourvu d'un dispositif de variation de flux magnétique monobloc disposé entre les faces internes de deux plaques ferromagnétiques dites, respectivement, première et seconde plaque. À cet égard, le dispositif de variation de flux magnétique comprend, selon son axe d'élongation AA' et dans l'ordre, une première pièce ferromagnétique prismatique, un aimant et une seconde pièce ferromagnétique prismatique. Le dispositif de variation de flux magnétique est, par ailleurs, agencé pour pivoter autour d'un axe pivot XX' entre deux positions d'équilibre dites, respectivement, première et seconde position. En particulier, les première et seconde pièces ferromagnétiques prismatiques entrent chacune en contact avec une face interne différente dès lors que le dispositif de variation de flux magnétique se trouve dans l'une ou l'autre des deux positions d'équilibre.

Selon la présente invention, le passage du dispositif de variation de flux magnétique d'une position d'équilibre à l'autre permet une inversion du flux magnétique généré par l'aimant et guidé par les plaques ferromagnétiques dans une bobine conductrice.

Dans l'énoncé qui va suivre, dès lors qu'un élément de la présente invention est qualifié de « ferromagnétique » (par exemple une pièce ou une plaque ferromagnétique), il est entendu que cet élément comprend un matériau ferromagnétique.

À cet égard, un matériau ferromagnétique peut comprendre au moins un des éléments choisi parmi : un alliage à base de Fer et à forte induction à saturation tels que le Fer pur, le fer allié au Si (FeSi), le Fer allié au Ni (FeNi), le fer allié au Co (FeCo).

Ces alliages peuvent également contenir des éléments d'addition tels que le Cr, P, Cu, Al.

Le matériau ferromagnétique peut également comprendre une ferrite de structure spinelle (MnZn, NiZn). Ces dernières, du fait de leur faible conductivité, sont particulièrement avantageuses car elles permettent de diminuer les pertes par courant de Foucault.

Enfin, le matériau ferromagnétique peut également comprendre au moins un des éléments choisi parmi : un alliage à base de Fe de type verres métalliques élaborés sous forme amorphe ou nanocristalline.

Sur les figures la à 9, on peut voir un convertisseur d'énergie électromagnétique 100.

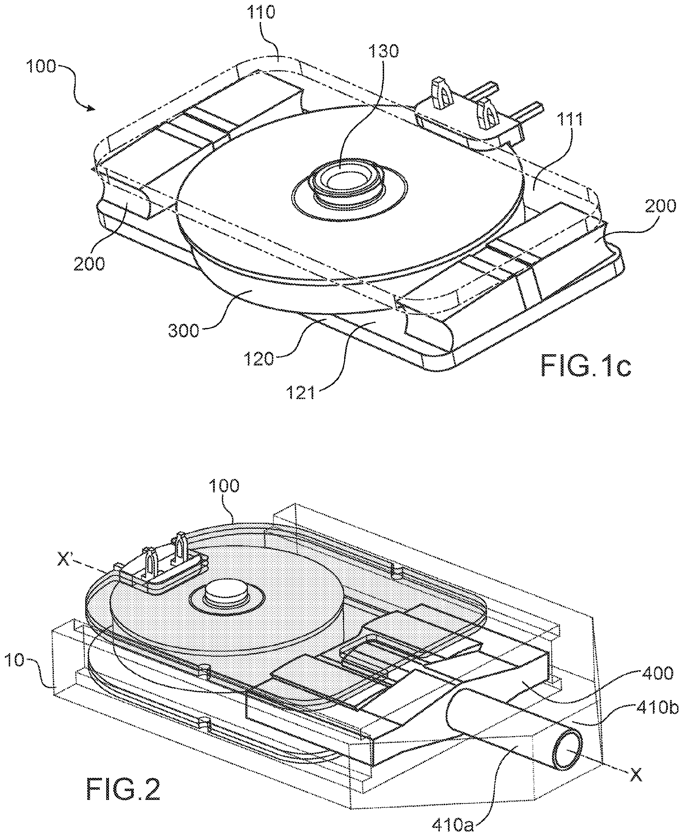

Le convertisseur d'énergie électromagnétique 100 comprend un support 10 (figure 2).

Par ailleurs, il est entendu que, tout au long de la description, dès lors qu'un élément ou un axe du convertisseur 100 sont considérés comme fixes, ils sont maintenus au support 10 par une liaison fixe (ou encastrement). En d'autres termes, la mention du support 10 pourra être omise dès lors qu'un élément ou axe du convertisseur 100 est considéré comme fixe.

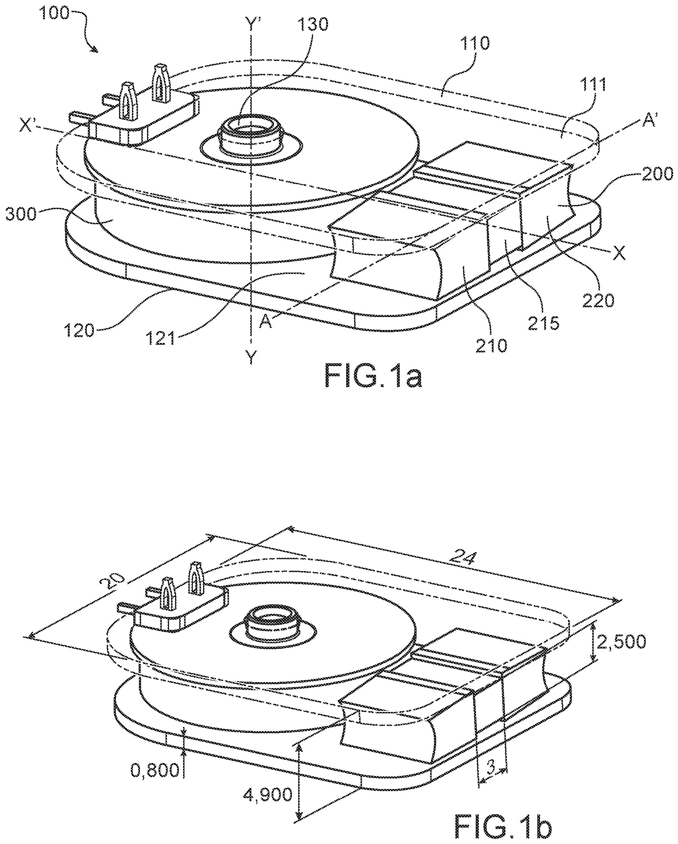

Le convertisseur d'énergie électromagnétique 100 comprend également deux plaques ferromagnétiques dites, respectivement, première plaque 110 et seconde plaque 120 (figure 1, 3, 5a, 5b).

Par « plaque », on entend un élément comprenant deux faces essentiellement parallèles, et reliées par un contour. La distance entre les deux faces selon une direction orthogonale à l'une des deux faces correspond à l'épaisseur de ladite plaque.

Les plaques ferromagnétiques 110 et 120 peuvent présenter une épaisseur comprise entre 300 µm et 2 mm, avantageusement inférieure à 1 mm et peuvent être composées d'un empilement de feuilles.

Les première et seconde plaques 110 et 120 comprennent chacune une face interne dites, respectivement, première face 111 et seconde face 121 (figure 1a, 1c).

Le convertisseur d'énergie électromagnétique 100 comprend également au moins un dispositif de variation de flux magnétique 200 (figure 1, 2, 5a, 5b). Le dispositif de variation de flux magnétique 200 est disposé entre les deux faces internes 111 et 121.

En d'autres termes, le dispositif de variation de flux magnétique 200 est disposé dans le volume défini par les deux faces internes 111 et 121. Il est également entendu que la disposition du dispositif de variation de flux magnétique 200 entre les deux faces internes 111 et 121 implique nécessairement que ces dernières sont en regard l'une de l'autre. Les faces internes 111 et 121 peuvent, par exemple, être essentiellement parallèles, avantageusement parallèles.

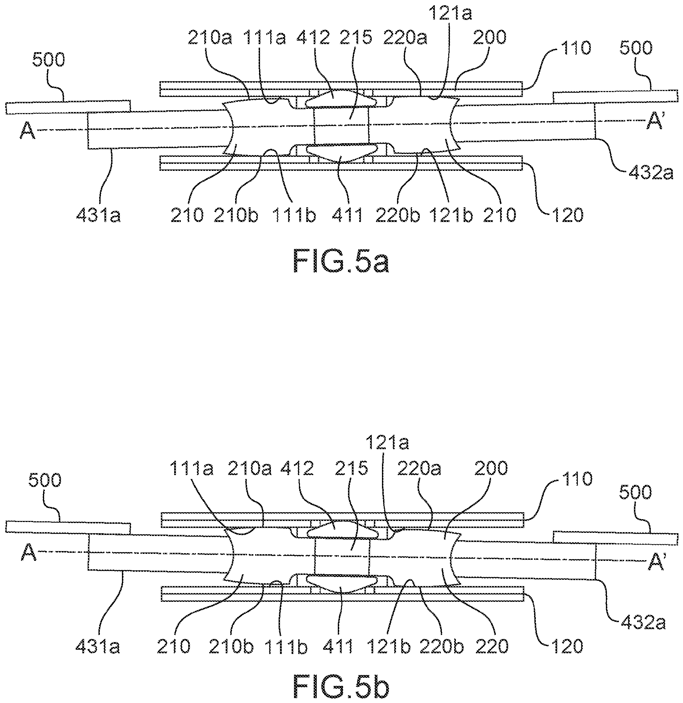

Le dispositif de variation de flux magnétique 200 est monobloc et s'étend selon un axe d'élongation AA' (figure 5a et 5b).

Le dispositif de variation de flux magnétique 200 comprend en particulier, selon son axe d'élongation AA' et dans l'ordre, une première pièce ferromagnétique prismatique 210, un aimant 215 et une seconde pièce ferromagnétique prismatique 220. Il est entendu que par « aimant », on entend un aimant permanent.

Par « pièce ferromagnétique prismatique », on entend une pièce présentant une forme prismatique. Toutefois, au sens de la présente invention, une forme prismatique peut comprendre au moins une face courbe selon des conditions qui seront exposées par la suite.

L'aimant 215 peut avantageusement avoir une forme parallélépipédique.

L'aimant 215 peut comprendre au moins un des éléments choisis parmi : aimants NdFeB, aimants SmCo, aimants ferrites.

L'aimant 215 peut présenter des pôles en alignement avec l'axe d'élongation AA'.

Les première 210 et seconde 220 pièces ferromagnétiques prismatiques sont par exemple disposées l'une sur le pôle sud et l'autre sur le pôle nord de l'aimant 215. L'assemblage entre l'une et/ou l'autre des première et seconde pièces ferromagnétiques prismatiques avec l'aimant 215 peut être obtenu par collage. Cet assemblage peut également être mécanique, par exemple via une encoche formée au niveau de l'une et/ou l'autre des pièces ferromagnétiques et dans la ou lesquelles est inséré l'aimant 215.

L'assemblage peut également être maintenu de manière solidaire par un élément non ferromagnétique, par exemple par l'organe pivot décrit par la suite.

Les première 210 et seconde 220 pièces ferromagnétiques prismatiques comprennent chacune deux faces de contact. En particulier, la première pièce ferromagnétique prismatique 210 comprend deux faces de contact dites, respectivement, première face supérieure 210a et première face inférieure 210b (figures 5a et 5b). De manière équivalente, la seconde pièce ferromagnétique prismatique 220 comprend deux faces de contact dites, respectivement, seconde face supérieure 220a et seconde face inférieure 220b (figures 5a et 5b).

Le dispositif de variation de flux magnétique 200 est également agencé pour pivoter autour d'un axe pivot XX' entre deux positions d'équilibre dites, respectivement, première position P1 et seconde position P2. L'axe pivot XX' peut, par exemple, être, en tous points, équidistant des deux faces internes. En d'autres termes, l'axe pivot XX' s'étend selon une direction d'un plan médian aux deux faces internes. L'axe pivot XX' peut également être perpendiculaire à l'axe d'élongation AA'.

Le passage du dispositif de variation de flux magnétique 200 de sa seconde position P2 vers sa première position P1 est nommé « cycle direct ».

Inversement, le passage du dispositif de variation de flux magnétique 200 de sa première position P1 vers sa seconde position P2 est nommé « cycle indirect ».

En particulier, les deux positons d'équilibre P1 et P2 sont des positions pour lesquelles les première 210 et seconde 220 pièces ferromagnétiques prismatiques entrent chacune en contact, par une de leur face de contact 210a, 210b, 220a et 220b, avec une face interne 111, 121 différente (figures 5a et 5b). Le contact entre une face interne 111, 121, et une face de contact 210a, 210b, 220a et 220b se fait selon une zone de contact 111a, 111b, 121a et 121b de la face interne considérée. Il est alors entendu que chaque face interne 111, 121 présente deux zones de contact 111a, 111b, 121a et 121b. Pour chaque face interne 111, 121, les deux zones de contact 111a, 111b et les zones de contact 121a, 121b sont à une distance D selon une direction perpendiculaire à l'axe pivot XX'.

Dès lors que le dispositif de variation de flux magnétique 200 se trouve dans une position d'équilibre, par exemple la position P1, les première 210 et seconde 220 pièces ferromagnétiques prismatiques sont en contact, respectivement, par la première face supérieure 210a avec la première face 111 et par la seconde face inférieure 220b avec la seconde face 121.

Inversement, dès lors que le dispositif de variation de flux magnétique 200 se trouve dans l'autre position d'équilibre, par exemple la position P2, les première 210 et seconde 220 pièces ferromagnétiques prismatiques sont en contact, respectivement, par la première face inférieure 210b avec la seconde face 121 et par la seconde face supérieure 220a avec la première face 111.

Les faces de contact 210a, 210b, 220a et 220b de chacune des première 210 et seconde 220 pièces ferromagnétiques prismatiques peuvent être planes, et agencées de sorte que le contact entre une face de contact et une face interne soit plan (figure 5b).

Alternativement, les faces de contact 210a, 210b, 220a et 220b de chacune des première 210 et seconde 220 pièces ferromagnétiques prismatiques peuvent présenter une courbure (face convexe), ladite courbure étant adaptée pour que le contact entre une face de contact 210a, 210b, 220a et 220b et une face interne 111, 121 soit linéaire selon une direction parallèle à l'axe pivot XX' (figure 5a).

Par exemple, le rayon de courbure R de la ou des faces de contact peut être au moins dix fois supérieur à la longueur de la pièce ferromagnétique prismatique concernée. Par « longueur de la pièce ferromagnétique prismatique », on entend la dimension de ladite pièce selon l'axe d'élongation AA'.

Cette ligne de contact peut, de manière alternative, être inclinée par rapport à l'axe pivot XX'. En d'autres termes, la ligne de contact n'est pas parallèle à l'axe pivot XX'. Par exemple, le contact selon la ligne de contact peut s'éloigner de l'axe XX' à mesure que l'on se rapproche du lien ferromagnétique. Cette configuration permet, en autre, de mieux répartir le flux magnétique au niveau des première 110 et seconde 120 plaques, et ainsi éviter des saturations locales.

Cet agencement est particulièrement avantageux car très simple à mettre en œuvre par rapport à un contact plan. Il permet, par ailleurs, de réduire l'effet de coussin d'air lorsque deux surfaces planes sont mises en contact en facilitant l'évacuation ou l'apport d'air au centre de la surface.

Par ailleurs, la circulation du flux magnétique entre la face de contact et la face interne n'est pas limitée à la zone de contact linéique, et est également effective de part et d'autre dudit contact linéique dans une zone où la face interne et la face de contact sont à proximité l'une de l'autre, par exemple d'une distance inférieure à 50µm.

Lors de l'établissement du contact entre une face de contact et une face interne, la plaque ferromagnétique 110, 120 en question peut également se déformer et épouser localement ladite face interne autour du contact linéique et ainsi accroître la zone de contact. À cet égard, une plaque ferromagnétique présentant un facteur de forme supérieur à 10 est particulièrement avantageuse.

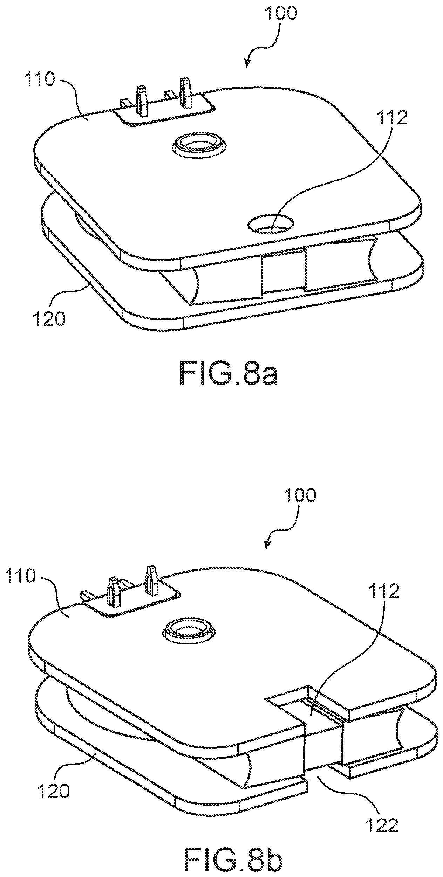

Chacune des deux plaques ferromagnétiques 110 et 120 peut présenter, selon leur épaisseur, respectivement, un premier évidement 112 (figures 8a et 8b) et un second évidement 122 (figure 8b), qui peuvent être traversants ou partiellement traversants. Le premier 112 et le second 122 évidements sont formés au droit de l'aimant 215.

Par « au droit de l'aimant », on entend selon une direction perpendiculaire aux faces internes.

Les surfaces couvertes par les premier 112 et second 121 évidements peuvent chacune être inférieures ou égales à la surface couverte par l'aimant 215.

Les premier 112 et second 121 évidements peuvent prendre la forme d'un trou (figure 8a) ou d'une encoche (figure 8b).

Les premiers 112 et second 121 évidements peuvent être traversant (figure 8a et figure 8b) ou partiels (figure 5a et figure 5b).

Ces premier 112 et second 121 évidements sont particulièrement avantageux car ils permettent de simplifier l'intégration mécanique du convertisseur d'énergie électromagnétique 100, notamment dans le cas de l'évidement partiel (figure 5a et figure 5b), et évitent également le rebouclage des lignes de champ magnétique sur l'aimant 215, améliorant la densité d'énergie et le rendement de conversion du dispositif.

Le convertisseur d'énergie électromagnétique 100 comprend également une bobine conductrice 300 (figure 1).

Par exemple, la bobine conductrice 300 s'étend selon un axe d'élongation YY' et comprend deux extrémités dites, respectivement, première extrémité et seconde extrémité.

La bobine conductrice est faite d'un enroulement d'un fil conducteur, par exemple un fil en cuivre, selon l'axe d'élongation YY' (figure 1). Il est entendu sans qu'il soit nécessaire de le préciser que le fil conducteur comprend deux extrémités qui sont, dans toute la suite de la présente description nommées bornes de la bobine conductrice 300.

La bobine conductrice 300 est agencée pour être traversée par un flux magnétique généré par l'aimant et guidé par les deux plaques ferromagnétiques 110 et 120, ainsi que par le lien ferromagnétique 130 dans un premier sens S1 dès lors que le dispositif de variation de flux magnétique 200 se trouve dans une des deux positions d'équilibre (par exemple la première position P1), et dans un second sens S2, opposé au premier sens S1, dès lors que ledit dispositif 200 se trouve dans l'autre des deux positions d'équilibre (par exemple le seconde position P2).

Un tel convertisseur d'énergie électromagnétique 100 dès lors qu'il est au repos se trouve dans l'une ou l'autre des deux positions d'équilibre. Il peut, en particulier, être stabilisé dans sa première position P1 d'équilibre, de sorte qu'un flux magnétique traverse la bobine conductrice selon le premier sens S1. Une force extérieure exercée sur le dispositif de variation de flux magnétique 200 permet de faire pivoter ledit dispositif 200 et provoque un cycle indirect. Lors de cette rotation (ou pivotement), il y a inversion du flux magnétique traversant la bobine conductrice 300, et par conséquent, apparition d'une tension électrique aux bornes de cette dernière.

Par ailleurs, la rotation est d'autant plus brutale que les première P1 et seconde P2 positions sont des positions d'équilibre dites stables. En d'autres termes, dès lors que le dispositif de variation de flux magnétique se trouve dans l'une ou l'autre des deux positions d'équilibre P1 ou P2, une force de rappel maintient ce dernier dans ladite position. Cet effet confère donc au convertisseur d'énergie électromagnétique 100 un caractère bistable. Cet effet est particulièrement avantageux dès lors que la tension électrique générée aux bornes de la bobine conductrice est d'autant plus importante que cette rotation est rapide (tel que dicté par loi de Lentz). Il est ainsi possible selon cet agencement de générer une tension électrique appréciable aux bornes de la bobine conductrice 300.

Par ailleurs, afin de réduire les courants de Foucault, les première 110 et seconde 120 plaques peuvent être stratifiées ou feuilletées, chaque strate ou chaque feuillet comprenant un matériau ferromagnétique. Par « stratifié » ou « feuilleté », on entend un empilement de plaques/feuilles ferromagnétiques (figures 5a et 5b).

De manière particulièrement avantageuse, la distance D peut être ajustée de sorte que, dès lors qu'une face interne 111, 121 est en contact avec l'une ou l'autre des première 210 et seconde 220 pièces ferromagnétiques prismatiques selon une zone de contact 111a, 111b, 121a, 121b, le flux magnétique généré par l'aimant 215 est inférieur à 20% du flux traversant la bobine conductrice, avantageusement nul, au niveau de l'autre zone de contact. Par exemple, la distance D peut être égale à au moins 25 % de la taille de face interne considérée selon une direction perpendiculaire à l'axe pivot XX'.

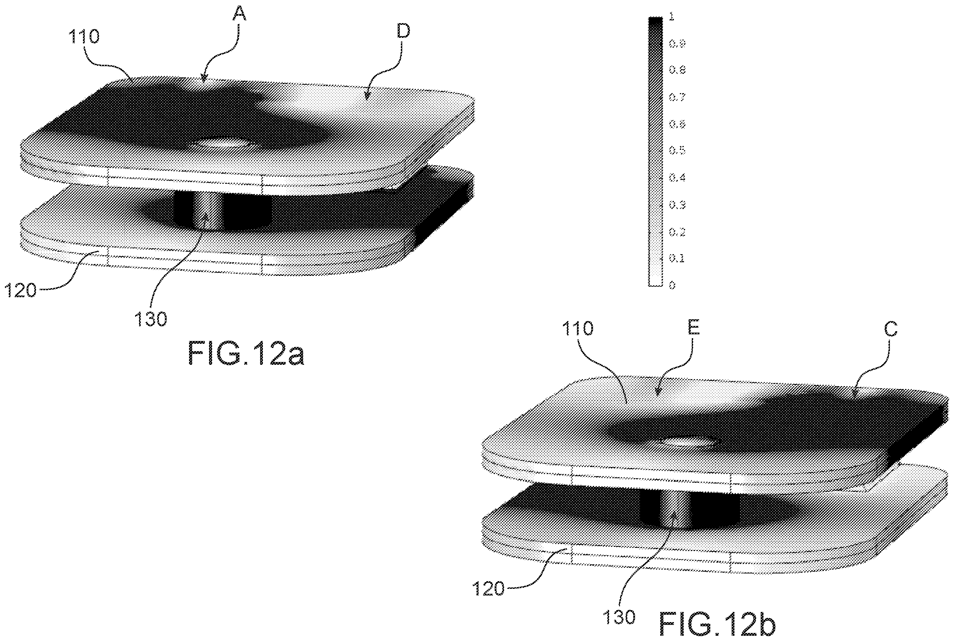

Selon cette configuration, tel que représenté aux figures 12a et 12b, chaque zone de contact, dès lors que le dispositif de variation de flux magnétique 200 effectue l'un ou l'autre des cycles direct et indirect, voit le champ magnétique l'a traversant passer d'une valeur sensiblement nulle (zone A figure 12a et zone C figure 12b) à la valeur B (zone D figure 12a et zone E figure 12b) ou inversement. En d'autres termes, quand bien même la variation du champ magnétique traversant la bobine est égale à 2B lors d'un cycle direct ou indirect, la variation du champ magnétique au niveau d'une zone de contact lors d'un même cycle reste sensiblement limitée à B. Cela permet alors de réduire les pertes fer au niveau des plaques ferromagnétiques, et par conséquent d'améliorer la puissance de sortie et donc le rendement du convertisseur d'énergie électromagnétique.

Selon un premier mode de réalisation avantageux, les deux plaques ferromagnétiques 110 et 120 sont maintenues l'une à l'autre par un lien ferromagnétique 130 autour duquel est formé l'enroulement de la bobine conductrice 300.

Selon une première variante de ce premier mode de réalisation, le lien ferromagnétique 130 peut être disposé de sorte que la bobine conductrice 300 soit contenue dans un volume délimité par les deux faces internes 111 et 121. En particulier, le lien ferromagnétique 130 comprend deux extrémités 131 et 132 au niveau desquelles sont fixées chacune des plaques ferromagnétiques 110 et 120. Le maintien d'une plaque ferromagnétique au niveau d'une extrémité du lien ferromagnétique 130 peut être obtenu par rivetage (figures la à 1c).

Le rivetage est particulièrement avantageux car il permet d'assurer un bon contact mécanique entre le lien ferromagnétique 130 et la plaque ferromagnétique 110, 120, et ainsi améliorer la circulation de flux magnétique (limitation de pertes fer) dans le circuit magnétique composé par les deux plaques ferromagnétiques 110, 120 et le lien ferromagnétique 130.

Le lien ferromagnétique 130 peut avoir une forme de cylindre.

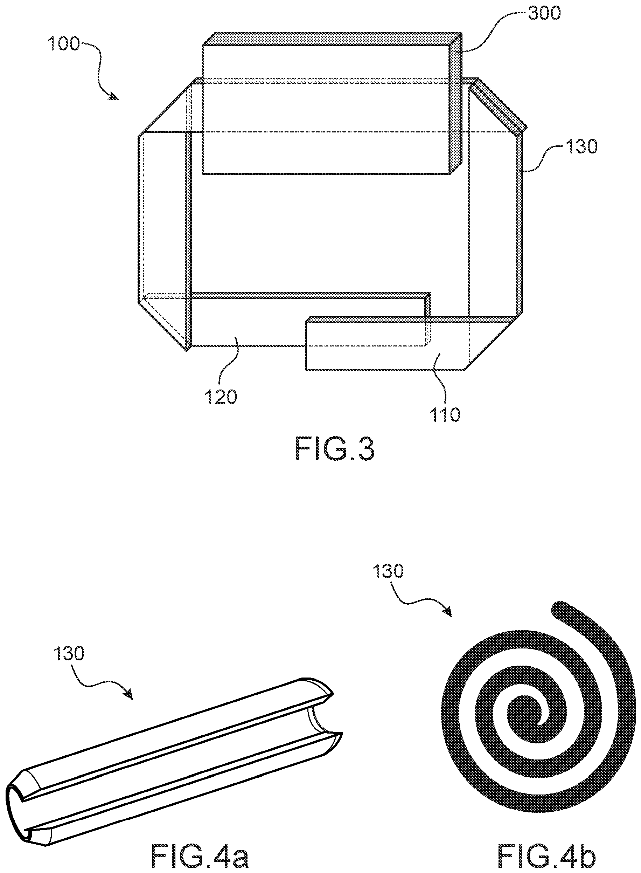

Toujours pour limiter les pertes fer, le lien ferromagnétique 130 peut être feuilleté. À titre d'exemple, le lien ferromagnétique 130 peut être une goupille élastique spiralée (figure 4b), ou être stratifié de feuilles ou de feuillets ferromagnétiques ou être une goupille élastique (figure 4a).

L'assemblage de ce type de goupille avec l'une ou l'autre des plaques ferromagnétiques peut être fait en force dans des orifices traversant ou partiellement traversant ménagés dans lesdites plaques. Ce montage en force peut également être combiné à un rivetage.

Toujours selon cette première variante, le convertisseur d'énergie électromagnétique 100 peut comprendre deux dispositifs de variation de flux magnétiques 200. Les deux dispositifs 200 sont par exemple disposés de part et d'autre de la bobine 300 (figure 1c).

Selon une seconde variante de ce premier mode de réalisation, la bobine conductrice 300 est déportée du volume défini par les deux faces internes 111 et 121.

Selon cette seconde variante, le lien ferromagnétique 130 liant les deux plaques ferromagnétiques 110 et 120 s'étend latéralement auxdites plaques 110 et 120.

Un tel agencement peut être obtenu, par exemple, par pliage d'une tôle ferromagnétique selon quatre plis (figure 3). L'espace séparant les deux plaques ferromagnétiques est égal à environ trois fois l'épaisseur de la tôle ferromagnétique. Un espace plus important peut être obtenu avec un plus grand nombre des pliages. L'utilisation d'une tôle ferromagnétique orientée (par exemple faite d'une matrice de fer-silicium orienté) permet d'obtenir un guidage du flux magnétique orienté selon l'orientation du matériau ferromagnétique.

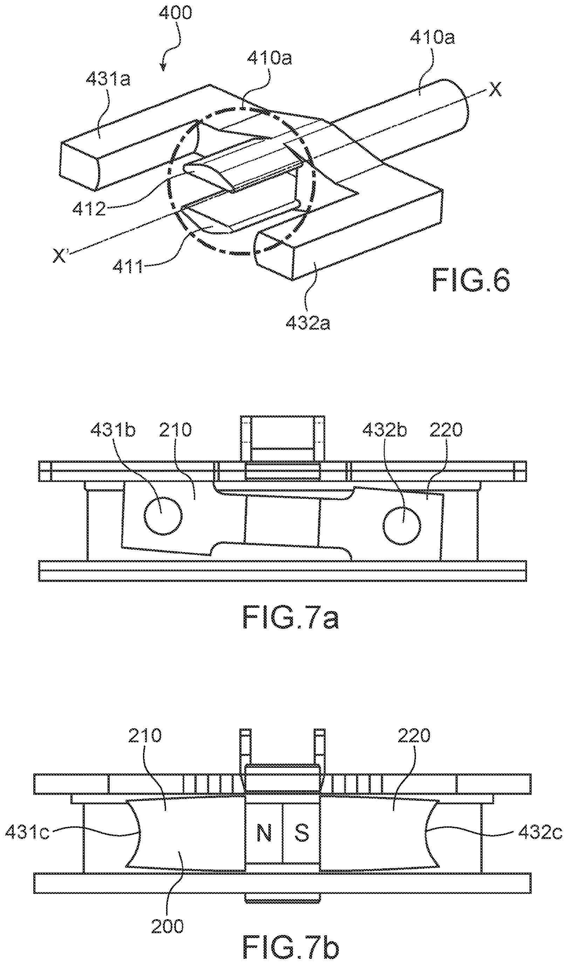

Toujours selon le premier mode de réalisation, le dispositif de variation de flux magnétique peut être lié au support 10 par une liaison pivot. La liaison pivot est par exemple assurée par un organe pivot 400 (figures 2 et 6). L'organe pivot 400 est par exemple agencé pour, dès lors qu'il est soumis à une force extérieure, imposer au dispositif de variation de flux magnétique 200 un mouvement de rotation autour de l'axe pivot XX'.

L'organe pivot 400 peut comprendre un arbre pivot 410a ménagé dans un alésage pivot 410b du support 10.

L'organe pivot 400 peut comprendre une section de maintien 410 agencée pour maintenir l'aimant 215. La section de maintien 410 peut, par exemple, comprendre deux palettes 411 et 412 chacune en appui contre respectivement deux faces opposées de l'aimants 215 (figures 5a, 5b, 6). De manière avantageuse, la section de maintien 410 peut être disposée dans le prolongement de l'arbre pivot 410a.

L'organe pivot 400 peut également comprendre une fourche 430 formée par deux branches latérales 431a et 432a (figures 5a, 5b, 6) maintenant le dispositif de variation de flux magnétique 200 au niveau des première 210 et seconde 220 pièces ferromagnétiques prismatiques.

Par exemple, les deux branches latérales 431a et 432a peuvent prendre la forme d'arbres introduits, respectivement, des deux alésages 431b et 432b formés dans l'une et l'autre des deux pièces ferromagnétiques prismatiques 210 et 220 (figure 7a).

De manière alternative, les deux pièces ferromagnétiques prismatiques 210 et 220 peuvent comprendre en leur extrémité une forme complémentaire à celle des deux branches latérales 431a et 431b. Les deux pièces ferromagnétiques prismatiques 210 et 220 peuvent par exemple présenter en leur extrémité, respectivement, une première concavité 431c et une seconde concavité 431c (figure 7b).

Toujours selon ce premier mode de mise en œuvre, le convertisseur 100 peut comprendre au moins une languette latérale 500 (figures 5a et 5b). L'au moins une languette est par exemple disposée sur l'organe pivot. L'au moins une languette latérale 500 est agencée pour provoquer le passage du dispositif de variation de flux magnétique 200 d'une position d'équilibre à l'autre, par exemple de sa première position P1 d'équilibre vers sa seconde position P2 d'équilibre, dès lors qu'une force extérieure est appliquée sur ladite languette.

En particulier, l'au moins une languette latérale 500 peut s'étendre selon une direction radiale à l'axe pivot XX'.

De manière avantageuse, l'au moins un languette latérale 500 peut être adaptée pour fléchir sous l'action d'une force extérieure destinée à provoquer la rotation du dispositif de variation de flux magnétique 200 selon un cycle direct. En particulier, l'au moins une languette 500 peut être une lame ressort.

Ainsi, l'au moins une languette latérale 500, lorsqu'elle est soumise à une force extérieure, fléchit dans une première phase et accumule une énergie mécanique. Dès lors que l'énergie mécanique accumulée par la languette augmente à un point tel que la position d'équilibre dans laquelle se trouve le dispositif de variation de flux magnétique 200 n'est plus tenable, l'énergie mécanique stockée est libérée brutalement et ledit dispositif 200 pivote autour de son axe pivot XX' pour adopter l'autre position d'équilibre.

Lors de cette rotation, la languette 500 libère une énergie qui a pour effet d'accélérer la rotation du dispositif 200, et par conséquent de permettre d'atteindre une tension électrique encore plus élevée aux bornes de la bobine conductrice 300.

Les inventeurs ont simulé le fonctionnement d'un convertisseur 100 selon la première variante du premier mode de réalisation. Les dimensions en millimètres d'un tel convertisseur sont illustrées à la figure 1b.

L'aimant 215 est en NdFeB, et présente une induction rémanente de 1,4 Tesla. Les première 210 et seconde 220 pièces ferromagnétiques prismatiques sont en Fer ou Fer Silicium ou Fer Nickel. La bobine conductrice 300 comprend 600 tours de fil de 100 µm de diamètre. Le dispositif de variation de flux magnétique peut pivoter selon un angle de +/- 3deg.

Selon cet agencement, l'énergie récupérée est de 1046µJ (464µJ/cm³) et le rendement de conversion électromécanique est de 50%.

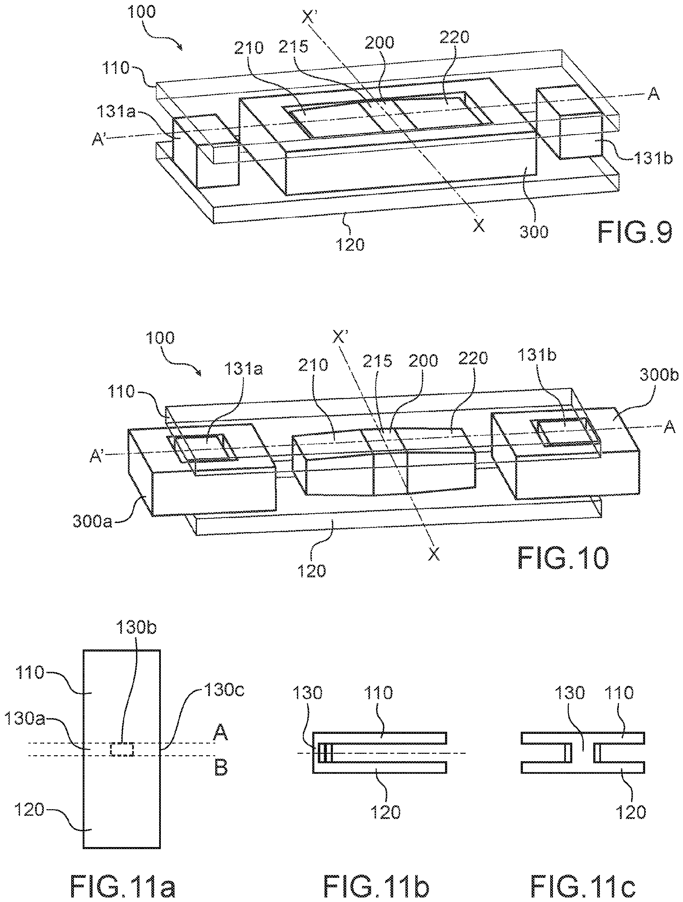

La figure 9 représente un second mode de réalisation de la présente invention qui reprend pour l'essentiel les caractéristiques du premier mode de réalisation.

Cependant, à la différence du premier mode, la bobine conductrice 300 est, dans ce cas de figure, formée autour du dispositif de variation de flux magnétique 200.

Les deux plaques ferromagnétiques 110 et 120 sont maintenues l'une à l'autre par deux liens ferromagnétiques 131a et 131b. Chaque lien ferromagnétique relie (magnétiquement), par exemple, un côté d'une plaque ferromagnétique à un côté de l'autre plaque ferromagnétique. Un lien ferromagnétique 131a et 131b peut par exemple s'étendre sur toute la longueur des côtés des deux plaques 110 et 120 reliés par un ledit lien.

La figure 10 représente un troisième mode de réalisation qui diffère du second mode en ce que le convertisseur d'énergie électromagnétique 100 comprend deux bobines conductrices dites, respectivement, première bobine conductrice 300a et seconde bobine conductrice 300b, formées chacune autour d'un lien ferromagnétique 131a et 131b.

Les figures 11a à 11c représentent un quatrième mode de réalisation de la présente invention qui reprend pour l'essentiel les caractéristiques de la première variante du premier mode de réalisation. Cependant, à la différence de cette première variante, le lien ferromagnétique 130 maintenant les plaques ferromagnétiques ensemble, relie un bord d'une plaque ferromagnétique à un bord de l'autre plaque ferromagnétique.

Selon ce quatrième mode de réalisation, les plaques ferromagnétiques 110, 120 et le lien ferromagnétique 130 sont obtenus par pliage d'une seule et même tôle ferromagnétique. Plus particulièrement, la tôle ferromagnétique est soumise à deux pliages, respectivement, selon une première ligne A et une seconde ligne B parallèles entre elles. La section de tôle disposée entre les lignes A et B, dite section centrale, est destinée à former le lien ferromagnétique 130, les deux autres sections de tôle, disposées de part et d'autre de la section centrale, forment chacune une plaque ferromagnétique 110, 120.

Les deux pliages sont alors exécutés de sorte que les deux plaques ferromagnétiques 110, 120 soient essentiellement parallèles entre elles, et avantageusement perpendiculaires au lien ferromagnétique 130 formé par la section centrale.

Les deux pliages peuvent être également précédés de découpes partielles selon les lignes A et B. En particulier, les découpes partielles sont destinées à former deux languettes ferromagnétiques 130a et 130c disposées et maintenues de part et d'autre d'une section de lien 130b liant les deux plaques ferromagnétiques. Avantageusement, ces languettes ferromagnétiques 130a et 130c sont repliées sur la section de lien 130b pour former le lien ferromagnétique.

La présente invention concerne également un interrupteur, par exemple un interrupteur autonome, comprenant le convertisseur d'énergie électromagnétique selon la présente invention.

Chacune des au moins une languettes latérale peut être associée à un bouton et/ou une fonctionnalité particulière de l'interrupteur.

La mise en œuvre d'un convertisseur d'énergie électromagnétique permet de réaliser des interrupteurs autonomes de petite taille et plus robuste par rapport aux interrupteurs connus de l'état de la technique.

Le convertisseur d'énergie électromagnétique peut également être mis en œuvre dans des commandes, des capteurs de fin de course, des détecteurs d'ouverture, et autres détecteurs autonomes actionnés mécaniquement.

Dans la plupart des cas, l'énergie récupérée servira en partie à transmettre une information radio à un récepteur sans-fil distant, information donnant par exemple l'état des interrupteurs/capteurs/détecteurs. Toutefois, d'autres applications sont envisageables, tel que par exemple le comptage d'événements, avec un enregistrement dans une mémoire et qui ne communique pas forcément à chaque pression mécanique.

### REFERENCES

[1] US9240267,
[2] US9509304.

## Revendications

1. Convertisseur d'énergie électromagnétique (100) comprenant :
- deux plaques ferromagnétiques (110, 120) présentant chacune une face interne (111, 121) ;
- au moins un dispositif de variation de flux magnétique (200) monobloc disposé entre les faces internes (111, 121), et qui comprend, selon un axe d'élongation AA' et dans l'ordre, une première pièce ferromagnétique prismatique (210), un aimant (215) et une seconde pièce ferromagnétique prismatique (220), ledit dispositif (200) est agencé pour pivoter autour d'un axe pivot XX' entre deux positions d'équilibre, et pour lesquelles les première (210) et seconde (220) pièces ferromagnétiques prismatiques entrent chacune en contact, selon des zones de contact (111a, 111b, 121a, 121b), avec une face interne (111, 121) différente dès lors que le dispositif de variation de flux magnétique (200) se trouve dans l'une ou l'autre des deux positions d'équilibre,
- une bobine conductrice (300, 300a, 300b) agencée pour être traversée par un flux magnétique généré par l'aimant (215) et guidé par les deux plaques ferromagnétiques (110, 120) dans un premier sens S1 dès lors que le dispositif de variation de flux magnétique (200) se trouve dans une des deux positions d'équilibre, et dans un second sens S2, opposé au premier sens S1, dès lors que ledit dispositif se trouve dans l'autre des deux positions d'équilibre, avantageusement, l'aimant (215) présente des pôles en alignement avec l'axe d'élongation AA'.

2. Convertisseur selon la revendication 1, dans lequel les zones de contact sur l'une et/ou l'autre des deux faces internes (111, 121) sont distantes d'une distance D, la distance D étant ajustée de sorte que, dès lors qu'une face interne (111, 121) est en contact avec l'une ou l'autre des première (210) et seconde (220) pièces ferromagnétiques prismatiques selon une zone de contact, le flux magnétique généré par l'aimant (215) est inférieur à 20 % du flux magnétique traversant la bobine conductrice, avantageusement nul, au niveau de l'autre zone de contact, avantageusement la distance D est égale à au moins 25 % de la taille de face interne considérée selon une direction perpendiculaire à l'axe pivot XX'.

3. Convertisseur selon la revendication 1 ou 2, dans lequel les première (210) et seconde (220) pièces ferromagnétiques prismatiques comprennent chacune deux faces de contact (210a, 210b, 220a et 220b) destinées à entrer en contact, respectivement, avec l'une ou l'autre des deux faces internes (111, 121) dès lors que le dispositif de variation de flux magnétique (200) se trouve dans l'une ou l'autre des deux positions d'équilibre.

4. Convertisseur selon la revendication 3, dans lequel les faces de contact (210a, 210b, 220a et 220b) de chacune des première (210) et seconde (220) pièces ferromagnétiques prismatiques sont planes, et agencées de sorte que le contact entre une face de contact et une face interne (111, 121) soit plan.

5. Convertisseur selon la revendication 3, dans lequel les faces de contact (210a, 210b, 220a et 220b) de chacune des première (210) et seconde (220) pièces ferromagnétiques prismatiques présentent une courbure, ladite courbure étant adaptée pour que le contact entre une face de contact et une face interne (111, 121) soit linéaire et avantageusement incliné par rapport à l'axe pivot XX'.

6. Convertisseur selon l'une des revendications 1 à 5, dans lequel les deux plaques ferromagnétiques (110, 120) sont maintenues l'une à l'autre par un lien ferromagnétique (130) autour duquel est formé l'enroulement de la bobine.

7. Convertisseur selon l'une des revendication 6, dans lequel le lien ferromagnétique (130) est disposé de sorte que la bobine conductrice (300) soit contenue dans un volume délimité par les deux faces internes (111, 121).

8. Convertisseur selon la revendication 7, dans lequel le lien ferromagnétique (130) comprend deux extrémités au niveau desquelles sont fixées chacune des plaques ferromagnétiques (110, 120), avantageusement le lien ferromagnétique (130) a une forme cylindrique, ou une forme cylindrique creuse ou une forme de goupille élastique ou de goupille élastique spiralée.

9. Convertisseur selon la revendication 6, dans lequel la bobine conductrice (300) est déportée du volume défini par les deux faces internes (111, 121).

10. Convertisseur selon l'une des revendications 1 à 9, dans lequel ledit convertisseur comprend en outre un support (10) auquel est lié, par une liaison pivot autour de l'axe pivot XX', le dispositif de variation de flux magnétique (200).

11. Convertisseur selon la revendication 10, dans lequel la liaison pivot est assurée par un organe pivot (400).

12. Convertisseur selon la revendication 11, dans lequel l'organe pivot comprend une section de maintien (420), ladite section de maintien (420) maintenant l'aimant (215) par une liaison fixe.

13. Convertisseur selon la revendication 11 ou 12, dans lequel l'organe pivot (400) comprend une fourche formée par deux branches latérales (431a, 432a) destinées à maintenir le dispositif de variation de flux magnétique (200) au niveau, respectivement, de la première pièce ferromagnétique prismatique (210), et de la seconde pièce ferromagnétique prismatique (220).

14. Convertisseur selon l'une des revendications 1 à 13, dans lequel l'une et/ou l'autre des plaques ferromagnétiques (110, 120) présente un évidement traversant ou partiel (112, 122) au droit de l'aimant (215).

15. Interrupteur comprenant un convertisseur selon l'une des revendications 1 à 14.

## Patentansprüche

1. Elektromagnetischer Energiewandler (100), umfassend:
- zwei ferromagnetische Platten (110, 120), die jeweils eine Innenfläche (111, 121) aufweisen;
- wenigstens eine einstückige Vorrichtung (200) zur Variation eines magnetischen Flusses, die zwischen den Innenflächen (111, 121) angeordnet ist, und die entlang einer Elongationsachse AA' und in dieser Reihenfolge ein erstes prismatisches ferromagnetisches Element (210), einen Magnet (215) und ein zweites prismatisches ferromagnetisches Element (220) umfasst, wobei die Vorrichtung (200) dazu ausgelegt ist, um eine Schwenkachse XX' zwischen zwei Gleichgewichtspositionen zu schwenken, für die das erste (210) und das zweite (220) prismatische ferromagnetische Element jeweils entlang Kontaktzonen (111a, 111b, 121a, 121b) in Kontakt mit einer unterschiedlichen Innenfläche (111, 121) gelangen, sobald die Vorrichtung (200) zur Variation eines magnetischen Flusses sich in der einen oder in der anderen der zwei Gleichgewichtspositionen befindet,
- eine leitende Spule (300, 300a, 300b), die dazu ausgelegt ist, von einem magnetischen Fluss durchsetzt zu werden, der durch den Magnet (215) erzeugt und durch die zwei ferromagnetischen Platten (110, 120) in einer ersten Richtung S1 geführt wird, sobald sich die Vorrichtung (200) zur Variation eines magnetischen Flusses in einer der zwei Gleichgewichtspositionen befindet, und in einer zweiten Richtung S2, entgegengesetzt zur ersten Richtung S1, sobald sich die Vorrichtung in der anderen der zwei Gleichgewichtspositionen befindet, wobei der Magnet (215) vorzugsweise Pole in Ausrichtung mit der Elongationsachse AA' aufweist.

2. Wandler nach Anspruch 1, bei dem die Kontaktzonen auf der einen und/oder der anderen der zwei Innenflächen (111, 121) um einen Abstand D beabstandet sind, wobei der Abstand D derart eingestellt ist, dass sobald eine Innenfläche (111, 121) in Kontakt mit der einen oder der anderen von dem ersten (210) und dem zweiten (220) prismatischen ferromagnetischen Element entlang einer Kontaktzone ist, der von dem Magnet (215) erzeugte magnetische Fluss im Bereich der anderen Kontaktzone kleiner als 20% des magnetischen Flusses ist, der die leitende Spule durchsetzt, vorzugsweise Null, wobei der Abstand D vorzugsweise wenigstens gleich 25% der Größe der Innenfläche ist, betrachtet entlang einer Richtung orthogonal zur Schwenkachse XX'.

3. Wandler nach Anspruch 1 oder 2, bei dem das erste (210) und das zweite (220) prismatische ferromagnetische Element jeweils zwei Kontaktflächen (210a, 210b, 220a und 220b) umfassen, die dazu ausgelegt sind, jeweils mit der einen oder der anderen der zwei Innenflächen (111, 121) in Kontakt zu treten, sobald die Vorrichtung (200) zur Variation eines magnetischen Flusses sich in der einen oder der anderen der zwei Gleichgewichtspositionen befindet.

4. Wandler nach Anspruch 3, bei dem die Kontaktflächen (210a, 210b, 220a und 220b) von jedem von dem ersten (210) und dem zweiten (220) prismatischen ferromagnetischen Element plan und derart ausgelegt sind, dass der Kontakt zwischen einer Kontaktfläche und einer Innenfläche (111, 121) plan ist.

5. Wandler nach Anspruch 3, bei dem die Kontaktflächen (210a, 210b, 220a und 220b) von jedem von dem ersten (210) und dem zweiten (220) prismatischen ferromagnetischen Element eine Krümmung aufweisen, wobei die Krümmung derart ausgelegt ist, dass der Kontakt zwischen einer Kontaktfläche und einer Innenfläche (111, 121) linear ist und vorzugsweise bezüglich der Schwenkachse XX' geneigt ist.

6. Wandler nach einem der Ansprüche 1 bis 5, bei dem die zwei ferromagnetischen Platten (110, 120) aneinander mittels einer ferromagnetischen Verbindung (130) gehalten sind, um die herum die Wicklung der Spule gebildet ist.

7. Wandler nach Anspruch 6, bei dem die ferromagnetische Verbindung (130) derart angeordnet ist, dass die leitende Spule (300) in einem Volumen enthalten ist, das durch die zwei Innenflächen (111, 121) begrenzt ist.

8. Wandler nach Anspruch 7, bei dem die ferromagnetische Verbindung (130) zwei Enden umfasst, in deren Bereich jede der ferromagnetischen Platten (110, 120) befestigt ist, wobei die ferromagnetische Verbindung (130) vorzugsweise eine zylindrische Form hat, oder eine hohlzylindrische Form, oder eine Form eines elastischen Stifts oder eines elastischen Spiralstifts.

9. Wandler nach Anspruch 6, bei dem die leitende Spule (300) von dem durch die zwei Innenflächen (111, 121) definierten Volumen versetzt ist.

10. Wandler nach einem der Ansprüche 1 bis 9, bei dem der Wandler ferner einen Träger (10) umfasst, an dem die Vorrichtung (200) zur Variation eines magnetischen Flusses mittels einer Schwenkverbindung um die Schwenkachse XX' herum angebracht ist.

11. Wandler nach Anspruch 10, bei dem die Schwenkverbindung durch ein Schwenkorgan (400) gewährleistet ist.

12. Wandler nach Anspruch 11, bei dem das Schwenkorgan einen Halteabschnitt (420) umfasst, wobei der Halteabschnitt (420) den Magnet (215) mittels einer festen Verbindung hält.

13. Wandler nach Anspruch 11 oder 12, bei dem das Schwenkorgan (400) eine Gabel umfasst, die durch zwei laterale Arme (431a, 432a) gebildet ist, die dazu ausgelegt sind, die Vorrichtung (200) zur Variation eines magnetischen Flusses im Bereich des ersten prismatischen ferromagnetischen Elements (210) beziehungsweise des zweiten prismatischen ferromagnetischen Elements (220) zu halten.

14. Wandler nach einem der Ansprüche 1 bis 13, bei dem die eine und/oder die andere der ferromagnetischen Platten (110, 120) eine durchgehende oder partielle Aussparung (112, 122) senkrecht zu dem Magnet (215) aufweist.

15. Unterbrecher, umfassend einen Wandler nach einem der Ansprüche 1 bis 14.

## Claims

1. An electromagnetic energy converter (100) comprising:
- two ferromagnetic plates (110, 120) each having an inner face (111, 121);
- at least one single-piece magnetic flux variation device (200) disposed between the inner faces (111, 121), and which comprises, along an elongation axis AA' in the following order, a first prismatic ferromagnetic part (210), a magnet (215) and a second prismatic ferromagnetic part (220), said device (200) is arranged to pivot around a pivot axis XX' between two balance positions, and for which the first (210) and second (220) prismatic ferromagnetic parts each come into contact, according to contact zones (111a, 111b, 121a, 121b), with a different inner face (111, 121) as soon as the magnetic flux variation device (200) lies in either of both balance positions,
- a conducting coil (300, 300a, 300b) arranged such that a magnetic flux generated by the magnet (215) and guided by both ferromagnetic plates (110, 120) passes therethrough in a first sense S1 as soon as the magnetic flux variation device (200) lies in one of both balance positions, and in a second sense S2, opposite to the first sense S1, as soon as said device lies in the other of both balance positions, advantageously the magnet (215) has poles in alignment with the elongation axis AA'.

2. The converter according to claim 1, wherein the contact zones on either or both inner faces (111, 121) are distant by a distance D, the distance D being adjusted so that, as soon as an inner face (111, 121) is in contact with either of the first (210) and second (220) prismatic ferromagnetic parts along a contact zone, the magnetic flux generated by the magnet (215) is lower than 20% of the magnetic flux passing through the conducting coil, advantageously zero, at the other contact zone, advantageously the distance D is equal to at least 25% of the inner face size considered along a direction perpendicular to the pivot axis XX'.

3. The converter according to one of claims 1 or 2, wherein the first (210) and second (220) prismatic ferromagnetic parts each comprise two contact faces (210a, 210b, 220a and 220b) for coming into contact, respectively, with either of both inner faces (111, 121) as soon as the magnetic flux variation device (200) lies in one or the other of both balance positions.

4. The converter according to claim 3, wherein the contact faces (210a, 210b, 220a and 220b) of each of the first (210) and second (220) prismatic ferromagnetic parts are planar, and arranged so that the contact between a contact face and an inner face (111, 121) is planar.

5. The converter according to claim 4, wherein the contact faces (210a, 210b, 220a and 220b) of each of the first (210) and second (220) prismatic ferromagnetic parts have a curvature, said curvature being adapted so that the contact between a contact face and an inner face (111, 121) is linear and advantageously tilted with respect to the pivot axis XX'.

6. The converter according to one of claims 1 to 5, wherein both ferromagnetic plates (110, 120) are held to each other by a ferromagnetic bond (130) around which winding of the coil is formed.

7. The converter according to claim 6, wherein the ferromagnetic bond (130) is disposed so that the conducting coil (300) is contained into a volume delimited by both inner faces (111, 121).

8. The converter according to claim 7, wherein the ferromagnetic bond (130) comprises two ends at which each of the ferromagnetic plates (110, 120) is fastened, advantageously the ferromagnetic bond (130) has a cylindrical shape, or a hollow cylindrical shape or a spring pin or coiled spring pin shape.

9. The converter according to claim 6, the conducting coil (300) is offset from the volume defined by both inner faces (111, 121).

10. The converter according to one of claims 1 to 9, wherein said converter further comprises a support (10) to which the magnetic flux variation device (200) is connected, through a pivot connection around the pivot axis XX'.

11. The converter according to claim 10, wherein the pivot connection is provided by a pivot member (400).

12. The converter according to claim 11, wherein the pivot member comprises a holding section (420), said holding section (420) holding the magnet (215) through a fixed connection.

13. The converter according to claim 11 or 12, wherein the pivot member (400) comprises a fork formed by two side branches (431a, 432a) for holding the magnetic flux variation device (200) at the first prismatic ferromagnetic part (210), and at the second prismatic ferromagnetic part (220) respectively.

14. The converter according to one of claims 1 to 13, wherein either or both ferromagnetic plates (110, 120) has a through or partial recess (112, 122) at right angles with the magnet (215).

15. A switch comprising a converter according to one of claims 1 to 14.
